# EUROPÄISCHE PATENTSCHRIFT

(11) **EP 1 036 962 B1**
(45) Veröffentlichungstag und Bekanntmachung des Hinweises auf die Patenterteilung: **24.09.2003**
(21) Anmeldenummer: 00102299.5
(22) Anmeldetag: 17.02.2000
(51) Int. Cl.: F16H 63/38

(54) **Rastvorrichtung**
Detent mechanism
Dispositif d'arrêt

(30) Priorität: 16.03.1999 DE 19911662
(43) Veröffentlichungstag der Anmeldung: 20.09.2000
(73) Patentinhaber: Volkswagen Aktiengesellschaft, 38436 Wolfsburg (DE)
(72) Erfinder: Sprenger, Ralf, 38518 Gifthorn (DE); Schäfer, Michael, Dipl.-Ing., 38518 Gifhorn (DE); Franz, Reinhold, 38518 Gifhorn (DE)
(74) Vertreter: Lindner, Manfred Klaus, Dipl.-Phys.

(56) Entgegenhaltungen:
- EP-A- 0 903 518
- DE-A- 4 110 555
- DE-B- 1 114 093
- DE-U- 7 735 295
- FR-A- 2 365 841
- PATENT ABSTRACTS OF JAPAN vol. 016, no. 057 (M-1210), 13. Februar 1992 (1992-02-13) & JP 03 255269 A (JIDOSHA KIKI CO LTD), 14. November 1991 (1991-11-14)

## Beschreibung

Die vorliegende Erfindung betrifft eine Rastvorrichtung für eine Schaltwelle in einem Schaltgetriebe eines Kraftfahrzeuges gemäß dem Oberbegriff des Patentanspruches 1.

Eine aus der DE-OS 41 10 555 bekannte Rastvorrichtung besteht aus zwei Rastelementen 16 und 18 (siehe dort Figur 1), die am Umfang einer Schaltwelle 10 um 90° zueinander versetzt angeordnet sind. Diese beiden Rastelemente 16, 18 dienen einerseits zur präzisen Gangvorwahl und andererseits zum präzisen Schalten einer Schaltvorrichtung. Jedes Rastelement 16, 18 weist dabei eine federnd vorgespannte Rastkugel auf, die jeweils mit einer oder mehreren Führungen am Außenumfang einer Rastierhülse zusammenwirkt. Eine Rastvorrichtung nach dem Oberbegriff des Anspruchs 1 ist aus der FR 2 365 841 bekannt.

Bei der herkömmlichen Rastvorrichtung sind die beiden Rastelemente 16 und 18 um 90° zueinander versetzt angeordnet. Kräfte, die über die Rastelemente 16 und 18 auf die Schaltwelle einwirken, belasten dabei die Lagerung(en) der Schaltwelle einseitig und führen zu einer erhöhten Lagerbelastung (Reibung).

Es ist daher die Aufgabe der vorliegenden Erfindung, eine Rastvorrichtung für eine Schaltwelle in einem Schaltgetriebe zu schaffen, die eine einseitige Belastung der Schaltwelle verhindert.

Diese Aufgabe wird durch eine Rastvorrichtung gelöst, welche die Merkmale gemäß dem kennzeichnenden Teil des Patentanspruches 1 aufweist.

Durch diese Ausbildung der Rastvorrichtung wird es erreicht, daß sich die Kräfte, die durch die Rastelemente auf die Schaltwelle aufgebracht werden, gegenseitig im wesentlichen aufheben.

Weiterbildungen einer solchen erfindungsgemäßen Rastvorrichtung sind der Gegenstand von Unteransprüchen 2 bis 7.

Die Erfindung wird nachfolgend anhand der Zeichnungen beschrieben, in denen die:
- Fig. 1: eine Schaltvorrichtung im Querschnitt zeigt; und
- Fig. 2: einen weiteren Querschnitt der Schaltvorrichtung aus Richtung der Pfeile A-A in der Figur 1 darstellt.

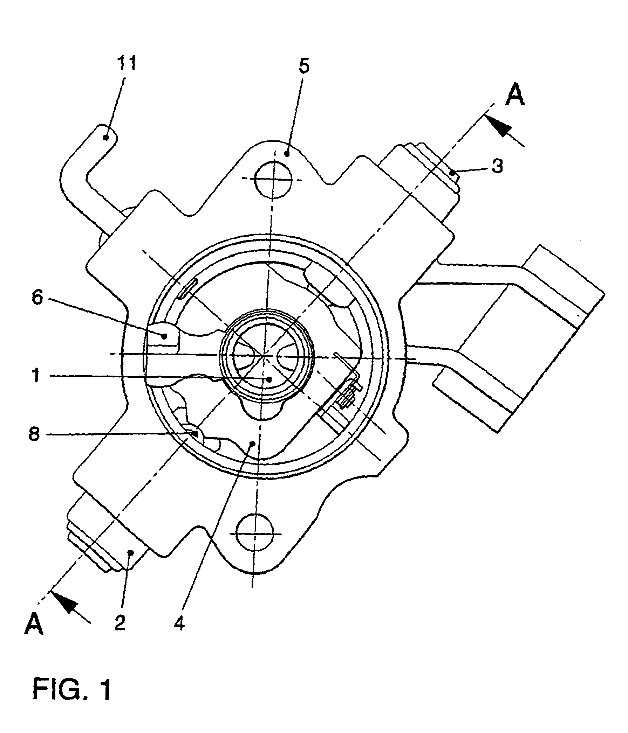

In der Figur 1 ist eine Schaltvorrichtung im Querschnitt gezeigt, in der eine Schaltwelle 1, senkrecht zur Zeichnungsebene verlaufend, angeordnet ist. Ein Schaltfinger 6 greift an der Schaltwelle 1 an. Um die Schaltwelle 1 herum, ist eine Rastierhülse 4 angeordnet, die am Außenumfang Vertiefungen bzw. Führungen aufweist, die mit Rastelementen 2 und 3 der Rastvorrichtung in Eingriff bringbar sind.

Die Rastelemente 2 und 3 verlaufen durch einen Deckel 5 der Schaltvorrichtung hindurch und sind jeweils in einer Öffnung 7 eingepreßt. Das Rastelement 2 ist für das Schalten bzw. die Schaltrichtung der Schaltwelle 1 vorgesehen, während das Rastelement 3 für das Wählen (der Gänge) bzw. die Wählrichtung vorgesehen ist.

Jedes Rastelement 2 bzw. 3 weist eine durch Federkraft vorgespannte Rastkugel 8 auf, die mit den oben erwähnten Führungen am Außenumfang der Rastierhülse 4 zusammenwirkt. Bei der erfindungsgemäßen Rastvorrichtung sind die beiden Rastelemente 2 und 3 an der Schaltwelle 1 sich diametral gegenüberliegend angeordnet, so daß sich die Kräfte, die von den Rastelementen 2 und 3 auf die Schaltwelle 1 aufgebracht werden, gegenseitig aufheben. Die Belastung der Lagerung der Schaltwelle 1 wird durch diese Maßnahme verringert, da zwischen den Rastelementen 2 und 3 ein Kräftegleichgewicht vorliegt.

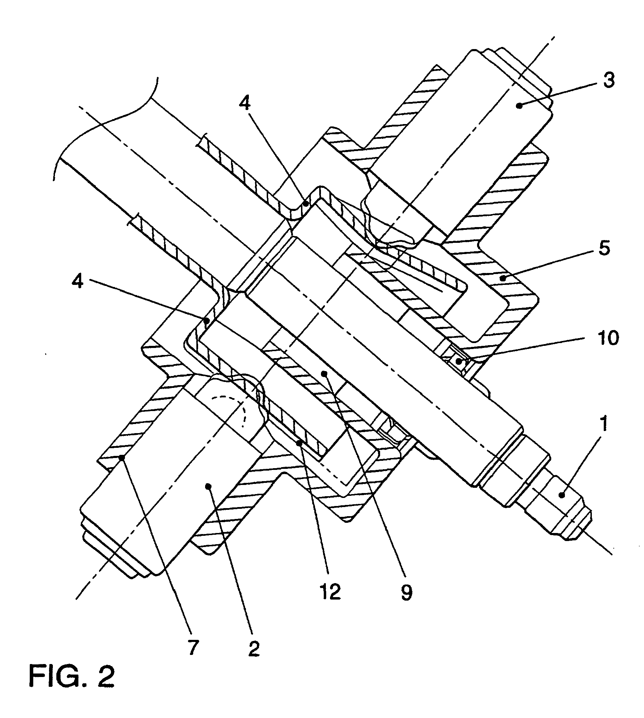

Die Schaltwelle 1 ist durch den Deckel 5 (siehe Figur 2) hindurchgeführt und zwischen dem Deckel 5 und der Schaltwelle 1 ist eine Dichtung 10 vorgesehen. Zwischen der Schaltwelle 1 und dem Deckel 5 ist eine Gleitbuchse 9 vorgesehen. Die Gleitbuchse 9 wird beim Zusammenbau der Schaltvorrichtung vorzugsweise eingefettet. Eine Arretierung 11 durchgreift den Deckel 5 der Schaltvorrichtung.

Das Rastelement 2 befindet sich nach der Figur 1 mit seiner Rastkugel 8 in Anlage mit einer Vertiefung 12 in der Rastierhülse 4, wobei diese Vertiefung 12 nach der Schnittdarstellung in der Figur 2 eine lineare Erstreckung (senkrecht zur Zeichnungsebene in der Figur 1) aufweist. Das Rastelement 3 liegt an einer unter einem stumpfen Winkel geknickt (siehe Figur 2) verlaufenden Außenumfangsfläche der Rastierhülse 4 an.

Demnach umfaßt eine erfindungsgemäße Rastvorrichtung für eine Schaltwelle eines Schaltgetriebes eines Kraftfahrzeuges zwei am Umfang der Schaltwelle angeordnete Rastelemente, die federnd gegen eine Rastierhülse vorgespannt sind, wobei diese beiden Rastelemente um im wesentlichen 180° gegeneinander versetzt an der Schaltwelle angeordnet sind. Durch diese Ausbildung der Rastvorrichtung wird erreicht, daß sich die Kräfte, die durch die beiden Rastelemente auf die Schaltwelle aufgebracht werden, gegenseitig aufheben und daß dadurch die Belastung für die Lagerung der Schaltwelle reduziert wird, wodurch deren Funktionalität erhalten bleibt und deren Lebensdauer verlängert wird.

### BEZUGSZEICHENLISTE

- 1: Schaltwelle
- 2: Rastelement (Schaltrichtung)
- 3: Rastelement (Wählrichtung)
- 4: Rastierhülse
- 5: Deckel
- 6: Schaltfinger
- 7: Öffnung(en)
- 8: Rastkugel
- 9: Gleitbuchse
- 10: Dichtung
- 1 1: Arretierung
- 12: Vertiefung

## Patentansprüche

1. Rastvorrichtung für eine Schaltwelle (1) eines Schaltgetriebes eines Kraftfahrzeuges, mit zwei am Umfang der Schaltwelle (1) angeordneten Rastelementen, nämlich einem ersten Rastelement (2) und einem zweiten Rastelement (3), wobei die Rastelemente (2, 3) federnd gegen eine Rastierhülse (4) vorgespannt und im wesentlichen180° Grad gegeneinander versetzt an der Schaltwelle (1) angeordnet sind, **dadurch gekennzeichnet, dass** das erste Rastelement (2) für die Schaltrichtung und das zweite Rastelement (3) für die Wählrichtung der Schaltwelle (1) vorgesehen ist und eine Gleitbuchse (9) zur Lagerung der Schaltwelle (1) im wesentlichen im Wirkbereich zwischen den Rastelementen (2 und 3) vorgesehen ist.

2. Rastvorrichtung nach Anspruch 1, **dadurch gekennzeichnet, daß** die sich aus der Vorspannung bzw. Federbelastung der Rastelemente (2, 3) ergebenden Kräfte an der Schaltwelle (1) im wesentlichen aufheben.

3. Rastvorrichtung nach Anspruch 1 oder 2, **dadurch gekennzeichnet, daß** das Rastelement (2) für die Schaltrichtung und das Rastelement (3) für die Wählrichtung der Schaltwelle (1) vorgesehen ist.

4. Rastvorrichtung nach einem der Ansprüche 1 bis 3, **dadurch gekennzeichnet, daß** die Rastelemente (2, 3) als Arretierschrauben ausgebildet sind.

5. Rastvorrichtung nach Anspruch 4, **dadurch gekennzeichnet, daß** die Arretierschrauben am Deckel (5) einer Schaltvorrichtung vorgesehen sind.

6. Rastvorrichtung nach einem der Ansprüche 1 bis 5, **dadurch gekennzeichnet, daß** zwischen dem Deckel (5) und der Schaltwelle (1) eine Dichtung (10) vorgesehen ist.

7. Rastvorrichtung nach einem der Ansprüche 1 bis 6, **dadurch gekennzeichnet, daß** zwischen der Schaltwelle (1) und dem Deckel (5) eine Gleitbuchse (9) vorgesehen ist.

## Claims

1. Detent mechanism for a gearshift shaft (1) of a gearbox of a motor vehicle, having two detent elements which are arranged on the circumference of the gearshift shaft (1), specifically a first detent element (2) and a second detent element (3), the detent elements (2, 3) being prestressed in sprung fashion against a latching sleeve (4) and being arranged offset by essentially 180° with respect to one another on the gearshift shaft (1), **characterized in that** the first detent element (2) is provided for the shifting direction and the second detent element (3) for the selecting direction of the gearshift shaft (1), and a sliding bushing (9) for bearing the gearshift shaft (1) is provided essentially in the action area between the detent elements (2 and 3).

2. Detent mechanism according to Claim 1, **characterized in that** the forces which result on the gearshift shaft (1) from the prestress or spring loading of the detent elements (2, 3) essentially cancel one another out.

3. Detent mechanism according to Claim 1 or 2, **characterized in that** the detent element (2) is provided for the shifting direction and the detent element (3) for the selecting direction of the gearshift shaft (1).

4. Detent mechanism according to one of Claims 1 to 3, **characterized in that** the detent elements (2, 3) are embodied as locking screws.

5. Detent mechanism according to Claim 4, **characterized in that** the locking screws are provided on the cover (5) of a gearshift mechanism.

6. Detent mechanism according to one of Claims 1 to 5, **characterized in that** a seal (10) is provided between the cover (5) and the gearshift shaft (1).

7. Detent mechanism according to one of Claims 1 to 6, **characterized in that** a sliding bushing (9) is provided between the gearshift shaft (1) and the cover (5).

## Revendications

1. Dispositif d'arrêt pour arbre d'embrayage (1) d'une boîte de vitesses d'un véhicule automobile, comportant deux éléments d'arrêt disposés sur la circonférence de l'arbre d'embrayage (1), à savoir un premier élément d'arrêt (2) et un deuxième élément d'arrêt (3), les éléments d'arrêt (2, 3) étant précontraints élastiquement contre un manchon d'enclenchement (4) et disposés substantiellement décalés l'un par rapport à l'autre de 180° sur l'arbre d'embrayage (1), **caractérisé en ce que** le premier élément d'arrêt (2) est prévu pour le sens d'embrayage et le deuxième élément d'arrêt (3) pour le sens de sélection de l'arbre d'embrayage (1) et qu'un manchon coulissant (9) servant d'assise à l'arbre d'embrayage (1) est prévu substantiellement dans la zone d'action située entre les éléments d'arrêt (2 et 3).

2. Dispositif d'arrêt selon la revendication 1, **caractérisé en ce que** les forces résultant de la précontrainte ou de la sollicitation par ressort des éléments d'arrêt (2, 3) se neutralisent substantiellement sur l'arbre d'embrayage (1).

3. Dispositif d'arrêt selon la revendication 1 ou 2, **caractérisé en ce que** l'élément d'arrêt (2) est prévu pour le dispositif d'embrayage et l'élément d'arrêt (3) pour le sens de sélection de l'arbre d'embrayage (1).

4. Dispositif d'arrêt selon l'une quelconque des revendications 1 à 3, **caractérisé en ce que** les éléments d'arrêt (2, 3) se présentent sous forme de vis de blocage.

5. Dispositif d'arrêt selon la revendication 4, **caractérisé en ce que** les vis de blocage (5) sont prévues sur le couvercle d'un dispositif d'embrayage.

6. Dispositif d'arrêt selon l'une quelconque des revendications 1 à 5, **caractérisé en ce qu'**un joint (10) est prévu entre le couvercle (5) et l'arbre d'embrayage (1).

7. Dispositif d'arrêt selon l'une quelconque des revendications 1 à 6, **caractérisé en ce qu'**entre le couvercle (5) et l'arbre d'embrayage (1) est prévu un manchon coulissant (9).
